# EUROPEAN PATENT APPLICATION

(11) **EP 4 039 851 A1**
(43) Date of publication of application: **10.08.2022**
(21) Application number: 22166116.8
(22) Date of filing: 13.03.2014
(51) Int. Cl.: C23C 22/56, C23C 22/66, C23C 22/68, C23F 11/08, C23F 11/14, C23F 11/18, C23G 1/22, C23G 1/26, C23G 1/06, C09D 5/08, C08K 3/10, C08K 5/34, C09D 7/40, B05D 7/14, B05D 7/16, C09D 5/44, C09D 175/04

(54) **AZOLE COMPOUNDS AS CORROSION INHIBITORS**

(30) Priority: 16.03.2013 US 201361802613 P
(62) Divisional of application: 14718844.5
(71) Applicant: PRC-Desoto International, Inc., Sylmar, California 91342 (US)
(72) Inventor: Morris, Eric L., Murrieta, 92563 (US)
(74) Representative: f & e patent

(57) **Abstract**

A composition for application to a metal substrate comprises a metal cation, an azole compound and an aqueous carrier. A composition for coating a substrate comprises a carrier comprising an epoxy carrier, a urethane carrier, or a fluorinated urethane carrier, and an azole compound. A coated substrate includes the composition for application to a metal substrate and a coating on the composition. A method of fabricating a coated substrate comprises applying the composition to a substrate, allowing the composition to dry to form a conversion coating, and applying a coating on the conversion coating.

## Description

### CROSS-REFERENCE TO RELATED APPLICATION(S)

This application claims priority to and the benefit of U.S. Provisional Application Serial No. 61/802,613, filed on March 16, 2013 in the U.S. Patent and Trademark Office, the entire content of which is incorporated herein by reference.

### BACKGROUND

The oxidation and degradation of metals used in aerospace, commercial, and private industries are serious and costly problems. To prevent or reduce the oxidation and degradation of the metals used in these applications; a protective coating can be applied to the metal surface. This protective coating may be the only coating applied to the metal, or other coatings can be applied to further protect the metal surface. One problem that maybe faced by manufacturers when coating a metal surface to prevent corrosion is providing adequate coverage for achieving the desired level of performance. It is difficult, particularly when coating large metal parts, such as in aerospace applications, to determine whether the metal substrate has been adequately coated in all desired areas.

Corrosion resistant coatings are known in the art of metal finishing, and older technologies involve chrome based coatings which have an undesirable environmental impact. Other corrosion resistant coatings are also known, including some chrome free coatings and/or pre-treatment coatings that may prevent or reduce oxidation and degradation of metals and aid in corrosion resistance. Metal surface coatings that can provide corrosion resistance and also aid in the prevention or reduction of oxidation and degradation are desired.

### SUMMARY

According to embodiments of the present invention, a composition for application to a metal substrate comprises an azole compound, a metal cation, and an aqueous carrier.

According to other embodiments of the present invention, a composition for coating a substrate comprises a carrier comprising an epoxy carrier, a urethane carrier, or a fluorinated urethane carrier, and an azole compound.

### DETAILED DESCRIPTION

According to embodiments of the present invention, a composition for application to a metal substrate comprises an aqueous carrier, an azole compound, and a metal cation corrosion inhibitor. In some embodiments, for example, the metal cation corrosion inhibitor may comprise a rare earth cation (such as, e.g., Ce, Y, or Nd), and/or a Group IA metal cation (such as, e.g., Li). The metal cation may be provided in the composition in the form of a metal salt. For example, in some embodiments, the metal salt which acts as the cation source may comprise yttrium nitrate, cerium nitrate, cerium chloride, and/or a lithium salt (such as, e.g., lithium carbonate).

In some embodiments, the azole compound may be incorporated into an epoxy, urethane, or fluorinated urethane in a primer or topcoat formulation, with an optional additional corrosion inhibitor, e.g., CaSO₄.

As used herein, the following terms have the following meanings.

The term "salt," as used herein, refers to an ionically bonded inorganic compound and/or the ionized anion and cation of one or more inorganic compounds in solution.

The term "substrate," as used here, refers to a material having a surface. In reference to applying a conversion coating, the term "substrate" refers to a metal substrate such as aluminum, iron, copper, zinc, nickel, magnesium, and/or an alloy of any of these metals including but not limited to steel. Some exemplary substrates include aluminum and aluminum alloys. Additional exemplary substrates include high copper aluminum substrates (i.e., substrates including an alloy containing both aluminum and copper in which the amount of copper in the alloy is high, for example, an amount of copper in the alloy of 3 to 4%).

The term "conversion coating," also referred to herein as a "conversion treatment" or "pretreatment," refers to a treatment for a metal substrate that causes the chemistry of the metal surface to be converted to a different surface chemistry. The terms "conversion treatment" and "conversion coating" also refer to the application or treatment of a metal surface in which a metal substrate is contacted with an aqueous solution having a metal of a different element than the metal contained in the substrate. Additionally, the terms "conversion coating" and "conversion treatment" refer to an aqueous solution having a metal element in contact with a metal substrate of a different element, in which the surface of the substrate partially dissolves in the aqueous solution, leading to the precipitation of a coating on the metal substrate (optionally using an external driving force to deposit the coating on the metal substrate).

The term "rare earth element," as used herein, refers to an element in Group IIIB (or the lanthanide series) of the periodic table of the elements or yttrium. The group of elements known as the rare earth elements includes, for example, elements 57-71 (i.e., La, Ce, Pr, Nd, Pm, Sm, Eu, Gd, Tb, Dy, Ho, Er, Tm, Yb and Lu) and yttrium. In some embodiments, however, as noted below, the term rare earth element may refer to La, Ce, Pr, Nd, Sm, Eu, Gd, Tb, Dy, Ho, Er, Tm, Yb, Lu and Y. In some embodiments, the composition is substantially chrome-free. As used herein, the term "substantially" is used as a term of approximation and not as a term of degree. Additionally, the term "substantially chrome-free" is used as a term of approximation to denote that the amount of chrome in the composition is negligible, such that if chrome is present in the composition at all, it is as an incidental impurity.

The term "Group IA metal ion," or "Group 1 metal ion" as used herein, refers to an ion or ions of elements from the first column of the periodic table (with the exception of H). The group of elements identified by Group IA or Group 1 (with the exception of H) is also known as the alkali metals, and includes, for example, Li, Na, K, Rb, Cs, and Fr.

The term "Group IIA metal ion," or "Group 2 metal ion" as used herein, refers to an ion or ions of elements from the second column of the periodic table. The group of elements identified by Group IIA or Group 2 is also known as the alkali earth metals, and includes, for example, Be, Mg, Ca, Sr, Ba and Ra.

As used in this disclosure, the term "comprise" and variations of the term, such as "comprising" and "comprises," are not intended to exclude other additives, components, integers ingredients or steps.

All amounts disclosed herein are given in weight percent of the total weight of the composition at 25°C and one atmosphere pressure, unless otherwise indicated.

According to some embodiments, the composition for application to a metal substrate comprises corrosion inhibitor comprising an azole compound and a metal cation. The azole compound may include cyclic compounds having 1 nitrogen atoms, such as pyrroles, 2 or more nitrogen atoms, such as pyrazoles, imidazoles, triazoles, tetrazoles and pentazoles, 1 nitrogen atom and 1 oxygen atom, such as oxazoles and isoxazoles, and 1 nitrogen atom and 1 sulfur atom, such as thiazoles and isothiazoles. Nonlimiting examples of suitable azole compounds include 2,5-dimercapto-1,3,4-thiadiazole (CAS:I072-71-5), IH-benzotriazole (CAS: 95-14-7), IH-1,2,3-triazole (CAS: 288-36-8), 2-amino-5-mercapto-1,3,4-thiadiazole (CAS: 2349-67-9), also named 5-amino-1,3,4-thiadiazole-2-thiol, and 2-amino-1,3,4-thiadiazole (CAS: 4005-51-0). In some embodiments, for example, the azole comprises 2,5-dimercapto-1,3,4-thiadiazole.

The azole compound may be present in the composition at a concentration of 0.0005 g per liter of composition to 3 g per liter of composition. For example, in some embodiments, the azole compound may be present in the composition at a concentration of 0.004 g per liter of composition to 0.1 g per liter of composition.

The metal cation may comprise one or more various metal cations which have corrosion inhibiting characteristics. For example, in some embodiments, the metal cation may comprise a rare earth element, such as, for example, La, Ce, Pr, Nd, Pm, Sm, Eu, Gd, Tb, Dy, Ho, Er, Tm, Yb, Lu. In some embodiments, the rare earth element comprises La, Ce, Pr, Nd, Sm, Eu, Gd, Tb, Dy, Ho, Er, Tm, Yb, Lu and/or Y. For example, in some embodiments, the rare earth element comprises Ce, Y, Pr and/or Nd. Other suitable metal cations include Group IA or Group IIA metal cations (i.e., the alkali metals and alkali earth metals). For example, in some embodiments, the metal cation may comprise an alkali metal, such as, for example, Li, Na, K, Rb, Cs and/or Fr, and/or an alkali earth metal, such as, for example, Be, Mg, Ca, Sr, Ba and/or Ra. In some embodiments, for example, the metal cation comprises an alkali metal, such as, for example, Li, Na, K, Rb and/or Cs, and/or an alkali earth metal, such as, for example, Be, Mg, Ca, Sr and/or Ba. In some embodiments, the metal cation comprises lithium, sodium, potassium, and/or magnesium. For example, in some embodiments, the metal cation comprises Ce, Y, Nd and/or Li.

The metal cation can be present in the composition at a concentration of 0.05 g per liter of composition to 25 g per liter of composition. For example, in some embodiments, the metal cation can be present in the composition at a concentration of 0.05 g per liter of composition to 16 g per liter of composition. In some embodiments, for example, the metal cation can be present in the composition at a concentration of 0.1 g per liter of composition to 10 g per liter of composition. For example, in some embodiments, the metal cation can be present in the composition at a concentration of 1g per liter of composition to 5 g per liter of composition. For example, when the metal cation includes a rare earth cation, the rare earth cation may be present at a concentration of 0.05 g per liter of composition to 25 g per liter of composition, or 0.1 g per liter of composition to 10 g per liter of composition. When the metal cation incudes an alkali metal or alkali earth metal cation, the alkali metal or alkali earth metal cation may be present at a concentration of 0.05 g per liter of composition to 16 g per liter of composition, or 1 g per liter of composition to 5 g per liter of composition. As discussed in further detail below, the metal cation may be provided in the composition in the form of a metal salt, in which case, the amounts listed here reflect the amount of the salt in the composition.

As noted above, the metal cation may be provided in the solution in the form of a salt (i.e., a metal salt may serve as the source for the metal cation in the composition) having and anion and the metal cation as the cation of the salt. The anion of the salt may be any suitable anion capable of forming a salt with the rare earth elements, alkali metals and/or alkali earth metals. Nonlimiting examples of anions suitable for forming a salt with alkali metals, alkali earth metals, and rare earth elements include carbonates, hydroxides, nitrates, halides (e.g., Cl⁻, Br, I⁻ or F⁻), sulfates, phosphates and silicates (e.g., orthosilicates and metasilicates). For example, the metal salt may comprise a carbonate, hydroxide, halide, nitrate, sulfate, phosphate and/or silicate (e.g., orthosilicate or metasilicate) of Li, Na, K, Rb, Cs, Fr, Be, Mg, Ca, Sr, Ba, Ra, Y, La, Ce, Pr, Nd, Pm, Sm, Eu, Gd, Tb, Dy, Ho, Er, Tm, Yb and/or Lu. In some embodiments for example, the metal salt may comprise a carbonate, hydroxide, halide, nitrate, sulfate, phosphate and/or silicate (e.g., orthosilicate or metasilicate) of Li, Na, K, Rb, Cs, Be, Mg, Ca, Sr, Ba, Y, La, Ce, Pr, Nd, Sm, Eu, Gd, Tb, Dy, Ho, Er, Tm, Yb and/or Lu. For example, in some embodiment, the metal salt may comprise a carbonate, hydroxide, halide, nitrate, sulfate, phosphate and/or silicate (e.g., orthosilicate or metasilicate) of Ce, Y, Nd and/or Li. Additionally, in some embodiments, the composition may include at least two metal salts, and the at least two metal salts may comprise different anions and/or cations from each other. For example, the at least to metal salts may comprise different anions but the same cations, or may comprise different cations but the same anions.

In some embodiments, the composition may further comprise an oxidizing agent. Any suitable oxidizing agent may be used, nonlimiting examples of which include organic peroxides, such as benzoyl peroxides, ozone and nitrates. One nonlimiting example of a suitable oxidizing agent is hydrogen peroxide. In some embodiments, the oxidizing agent may be present in the composition in an amount of 0.001 wt% to 15 wt%. For example, in some embodiments the oxidizing agent may comprise a 30% solution of hydrogen peroxide present in an amount of 0.001 wt% to 15 wt%, for example 0.002wt% to 0.006 wt%.

In some embodiments, the composition may be an aqueous coating composition, and the composition may therefore further include an aqueous carrier which may optionally comprise one or more organic solvents. Nonlimiting examples of suitable such solvents include propylene glycol, ethylene glycol, glycerol, low molecular weight alcohols, and the like. When used, the organic solvent may be present in the composition in an amount of 30 g solvent per 12 liters of composition to 400 g solvent per 12 liters of composition, with the remainder of the carrier being water. For example, in some embodiments, the organic solvent may be present in the composition in an amount of 100 g solvent per 12 liters of composition to 200 g solvent per 12 liters of composition, for example 107 g solvent per 12 liters of composition, with the remainder of the carrier being water. In some embodiments, however, the aqueous carrier is primarily water, e.g., deionized water. The aqueous carrier is provided in an amount sufficient to provide the composition with the concentrations of the metal ions and azole compounds described above.

In some embodiments of the present invention, composition may further comprise one or more additives for promoting corrosion resistance, adhesion to the metal substrate, adhesion of subsequent coatings, or to provide another desired aesthetic or functional effect. An additive, if used, may be present in the composition in an amount of 0.01 weight percent up to 80 weight percent based on the total weight of the composition. These optional additives may be chosen based on the desired function of the resulting coating and/or its application or intended use. Suitable additives may include a solid or liquid component admixed with the composition for the purpose of affecting one or more properties of the composition. The additive may include, for example, a surfactant, which can assist in wetting the metal substrate, and/or other additives that can assist in the development of a particular surface property, such as a rough or smooth surface. Other nonlimiting examples of suitable additives include flow control agents, thixotropic agents such as bentonite clay, gelatins, cellulose, anti-gassing agents, degreasing agents, anti-foaming agents, organic co-solvents, catalysts, dyes, amino acids, urea based compounds, complexing agents, valence stabilizers, and the like, as well as other customary auxiliaries. Suitable additives are known in the art of formulating compositions for surface coatings and can be used in the compositions according to embodiments of the present invention, as would be understood by those of ordinary skill in the art with reference to this disclosure.

In some embodiments, the composition may additionally comprise a surfactant (such as, for example, an anionic, nonionic and/or cationic surfactant), mixture of surfactants, or detergent-type aqueous solution. Nonlimiting examples of some suitable commercially available surfactants include Dynol 604 and Carbowet DC-01 (both available from Air Products & Chemicals, Inc., Allentown, PA), and Triton X-100 (available from The Dow Chemical Company, Midland, MI). The surfactant, mixture of surfactants, or detergent-type aqueous solution may be present in the composition in an amount of 0.0003 wt% to 3 wt%, for example, 0.000375 wt% to 1 wt%, or 0.02 wt%. In one embodiment, the composition having a surfactant, mixture of surfactants, or detergent-type aqueous solution may be utilized to combine a metal substrate cleaning step and a conversion coating step in one process. In another embodiment, the composition having a surfactant, mixture of surfactants, or detergent-type aqueous solution can additionally contain an oxidizing agent, as previously described herein.

The composition may also contain other components and additives such as, but not limited to, carbonates, surfactants, chelators, thickeners, allantoin, polyvinylpyrrolidone, halides, and/or adhesion promoters. For example, in some embodiments, the composition may further comprise allantoin, polyvinylpyrrolidone, surfactants, chelators, such as EDTA, TEA, citric acid, hexamethylenetetramine (another chelator), thiourea (another chelator), and/or an alcohol such as ethanol, isopropanol, etc. and/or other additives and/or co-inhibitors.

In some embodiments, the composition may also contain an indicator compound, so named because they indicate, for example, the presence of a chemical species, such as a metal ion, the pH of a composition, and the like. An "indicator", "indicator compound", and like terms as used herein refer to a compound that changes color in response to some external stimulus, parameter, or condition, such as the presence of a metal ion, or in response to a specific pH or range of pHs.

The indicator compound used according to certain embodiments of the present invention can be any indicator known in the art that indicates the presence of a species, a particular pH, and the like. For example, a suitable indicator may be one that changes color after forming a metal ion complex with a particular metal ion. The metal ion indicator is generally a highly conjugated organic compound. A "conjugated compound" as used herein, and as will be understood by those skilled in the art, refers to a compound having two double bonds separated by a single bond, for example two carbon-carbon double bonds with a single carbon-carbon bond between them. Any conjugated compound can be used according to the present invention.

Similarly, the indicator compound can be one in which the color changes upon change of the pH; for example, the compound may be one color at an acidic or neutral pH and change color in an alkaline pH, or vice versa. Such indicators are well known and widely commercially available. An indicator that "changes color when exposed to an alkaline pH" therefore has a first color (or is colorless) when exposed to an acidic or neutral pH and changes to a second color (or goes from colorless to colored) when exposed to an alkaline pH. Similarly, an indicator that "changes color when exposed to an acidic pH" goes from a first color/colorless to a second color/colored when the pH changes from alkaline/neutral to acidic.

Nonlimiting examples of such indicator compounds include methyl orange, xylenol orange, catechol violet, bromophenol blue, green and purple, eriochrome black T, Celestine blue, hematoxylin, calmagite, gallocyanine, and combinations thereof. According to some embodiments, the indicator compound comprises an organic indicator compound that is a metal ion indicator. Nonlimiting examples of indicator compounds include those found in Table 1. Fluorescent indicators, which will emit light in certain conditions, can also be used according to the present invention, although in certain embodiments the use of a fluorescent indicator is specifically excluded. That is, in certain embodiments, conjugated compounds that exhibit fluorescence are specifically excluded. As used herein, "fluorescent indicator" and like terms refers to compounds, molecules, pigments, and/or dyes that will fluoresce or otherwise exhibit color upon exposure to ultraviolet or visible light. To "fluoresce" will be understood as emitting light following absorption of light or other electromagnetic radiation. Examples of such indicators, often referred to as "tags", include acridine, anthraquinone, coumarin, diphenylmethane, diphenylnaphthlymethane, quinoline, stilbene, triphenylmethane, anthracine and/or molecules containing any of these moieties and/or derivatives of any of these such as rhodamines, phenanthridines, oxazines, fluorones, cyanines and/or acridines.

**TABLE 1**

| **Compound** | **Structure** | **CAS Reg. No.** |
|---|---|---|
| **Catechol Violet** | 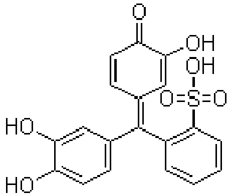 | 115-41-3 |
| Synonyms: | | |
| Catecholsulfonphthalein; | | |
| Pyrocatecholsulfonephthalein; | | |
| Pyrocatechol Violet | | |
| **Xylenol Orange** | 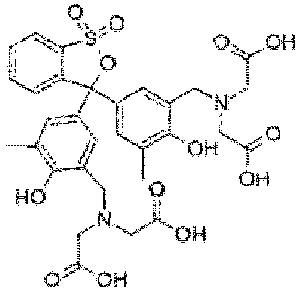 | 3618-43-7 |
| Synonym: | | |
| 3,3'-Bis[N,N-bis(carboxymethyl)aminomethyl]-*o*-cresolsulfonephthalein tetrasodium salt | | |

According to one embodiment, the conjugated compound comprises catechol violet, as shown in Table 1. Catechol violet (CV) is a sulfone phthalein dye made from condensing two moles of pyrocatechol with one mole of o-sulfobenzoic acid anhydride. It has been found that CV has indicator properties and when incorporated into corrosion resistant compositions having metal ions, it forms complexes, making it useful as a chelometric reagent. As the composition containing the CV chelates metal ions, a generally blue to blue-violet color is observed.

According to another embodiment, xylenol orange, as shown in Table 1 is employed in the compositions according to embodiments of the present invention. It has been found that xylenol orange has metal ion indicator properties and when incorporated into corrosion resistant compositions having metal ions, it forms complexes, making it useful as a chelometric reagent. As the composition containing the xylenol orange chelates metal ions, a solution of xylenol orange turns from red to a generally blue color.

The indicator compound may be present in the composition in an amount of from 0.01g/1000 g solution to 3 g/1000 g solution, such as 0.05g/1000 g solution to 0.3 g/1000 g solution.

In some embodiments of the present invention, the conjugated compound, if it changes color in response to a certain external stimulus, provides a benefit when using the current compositions, in that it can serve as a visual indication that a substrate has been treated with the composition. For example, a composition comprising an indicator that changes color when exposed to a metal ion that is present in the substrate will change color upon complexing with metal ions in that substrate; this allows the user to see that the substrate has been contacted with the composition. Similar benefits can be realized by depositing an alkaline or acid layer on a substrate and contacting the substrate with a composition of the present invention that changes color when exposed to an alkaline or acidic pH.

In addition, the use of certain conjugated compounds according to the present invention can provide the substrate with improved adhesion to subsequently applied coating layers. This is particularly true if the conjugated compound has hydroxyl functionality. Accordingly, some embodiments of the present compositions allow for deposition of subsequent coating layers onto a substrate treated according to the present invention without the need for a primer layer. Such coating layers can include urethane coatings and epoxy coatings.

In some embodiments, the composition may include an azole compound, a rare earth salt and water. The azole compound may be present in this composition in an amount of 0.0005 g per liter of composition to 3 g per 1000 g of composition, or 0.004 g per 1000 g of composition to 0.1g per liter of composition. The rare earth salt may be present in this composition in an amount of 0.05 g per 1000 g of composition to 25 g per 1000 g of composition, or 0.1 g per 1000 g of composition to 10 g per 1000 g of composition. The water may make up the balance of the 1000 g of solution (i.e., the water is provided in an amount sufficient to provide the azole compound and rare earth salt in the concentrations described here).

According to some embodiments, the composition may include an azole compound, an yttrium salt and water. The azole compound may be present in this composition in an amount of 0.0005 g per liter of composition to 3 g per 1000 g of composition, or 0.004 g per 1000 g of composition to 0.1g per liter of composition. The yttrium salt may be present in this composition in an amount of 0.05 g per 1000 g of composition to 25 g per 1000 g of composition, or 0.1 g per 1000 g of composition to 10 g per 1000 g of composition. The water may make up the balance of the 1000 g of solution (i.e., the water is provided in an amount sufficient to provide the azole compound and yttrium salt in the concentrations described here).

In some embodiments, the composition may include an azole compound, a lithium salt and water. The azole compound may be present in this composition in an amount of 0.0005 g per liter of composition to 3 g per 1000 g of composition, or 0.004 g per 1000 g of composition to 0.1g per liter of composition. The lithium salt may be present in this composition in an amount of 0.05 g per 1000 g of composition to 16 g per 1000 g of composition, or 1 g per 1000 g of composition to 5 g per 1000 g of composition. The water may make up the balance of the 1000 g of solution (i.e., the water is provided in an amount sufficient to provide the azole compound and rare earth salt in the concentrations described here).

According to some embodiments, the composition may comprise an azole compound and one or more rare earth element ions. For example, the composition may comprise an aqueous carrier, an azole compound, and a rare earth element salts. In some embodiments, for example, the rare earth element salt comprises first and second rare earth element salts, each salt comprising an anion and a cation, the anion of the first and second salts being different, and the cation of the first and second salts being the same or different, where each cation, individually, is a rare earth element. It has been found that rare earth element salts (such as praseodymium, cerium, neodymium, samarium, and terbium salts) that include a mixture of multiple anions (such as a halide and a nitrate, for example), when incorporated into conversion coating compositions may influence the deposition parameters of the resulting rare earth element coating, including, for example, the resulting coating's morphology and performance. In some embodiments, for example, the composition may comprise an azole compound, at least one rare earth element cation (such as cerium or both cerium and yttrium), a combination of nitrate and halide anions, and optionally an oxidizing agent (such as, for example H₂O₂). In some embodiments, the composition has a neutral pH. In some embodiments, for example, the composition may include yttrium nitrate (YNO₃), cerium nitrate (CeNO₃), cerium chloride (CeCl₃), hydrogen peroxide (H₂O₂), an azole compound, and an aqueous carrier (such as water). The yttrium nitrate may be included in an amount of 0.06 g/L to 0.3 g/L, the cerium nitrate may be included in an amount of 0.06 g/L to 0.3 g/L, the cerium chloride may be included in an amount of 0.006 g/L to 0.03 g/L, one drop (i.e., 0.478 g) of a 30% solution of hydrogen peroxide may be used, the azole compound may be included in amount of 0.01 g/L to 1 g/L, and the aqueous carrier (e.g., water) may be added in an amount sufficient to make one liter of solution and/or to provide the yttrium nitrate, cerium nitrate, cerium chloride and azole compound in the concentrations described here. A composition including yttrium nitrate, cerium nitrate, cerium chloride and an azole compound in the concentrations within the above ranges may have an acidic pH, i.e., a pH of less than 7.

According to some other embodiments of the invention, the composition may comprise an aqueous carrier, an azole compound, a Group IA (or Group 1) metal cation, and an anion. In some embodiments, the Group IA (or Group 1) metal ion may comprise lithium, sodium and/or potassium. The anion may comprise a hydroxide, halide, phosphate, and/or carbonate anion. In some embodiments, for example, the composition comprises an aqueous carrier, an azole compound, a lithium ion, and an anion, such as carbonate (i.e., the lithium ion may be provided by a lithium carbonate source). In some embodiments, the composition may further include a halide source, for example a fluoride source, such as zinc fluoride. For example, in some embodiments, the composition may include lithium carbonate, an azole compound and an aqueous carrier (e.g., water). The lithium carbonate may be included in an amount of 1.6 g/L, the azole compound may be included in an amount of 0.01 g/L to 1 g/L, and the aqueous carrier (e.g., water) may be provided in an amount sufficient to provide a total composition weight of 800 g (e.g., the aqueous carrier is provided in an amount sufficient to provide a final composition having the concentrations of the lithium carbonate and azole compound described here). A composition including lithium carbonate and an azole compound in the concentrations within the above ranges may have an alkaline pH, i.e., a pH above 7.

According to another embodiment, a process for preparing a metal substrate comprises optionally degreasing the metal substrate. The metal substrate may then be immersed or spray coated with an alkaline deoxidizer, for example, a lithium containing alkaline deoxidizer, for 1 to 10 minutes, for example 3 minutes. The metal substrates may then optionally be allowed to dry at ambient temperature. However, the substrate need not be allowed to dry, and in some embodiments, drying is omitted. A composition according to an embodiment of the invention comprising an azole compound and a corrosion inhibiting metal ion, such as a rare earth ion, an alkali metal ion and/or an alkali earth metal ion (e.g., a lithium ion) may then be applied to the metal substrate. The composition may be applied without rinsing the substrate prior to and or after coating, although a rinse may be performed if desired.

According to some embodiments, a process for coating the metal substrate comprises coating the metal substrate with an alkali metal ion containing composition according to an embodiment of the present invention (e.g., a lithium based composition), optionally allowing the alkali metal ion containing composition on the metal substrate to dry or partially dry at room temperature, and optionally rinsing the substrate after drying or partial drying (if performed). An azole containing composition according to embodiments of the present invention comprising an azole compound and a rare earth element ion may then be applied to the metal substrate. However, other metal ions which provide corrosion resistance and are capable of forming a precipitate upon a change in pH may also be used, as well as combinations of metal ions, such as, but not limited to, Zn and Zr. A final rinse is not required prior to subsequent topcoat or primer coatings. As the lithium based coating composition is alkaline, prior deoxidizing and/or degreasing is not required, but may be performed if desired. Further, applying the compositions according to embodiments of the invention at an elevated temperature and/or drying the coated substrate at an elevated temperature is not required. Also, a final rinse of the substrate is not required to achieve corrosion resistance on the substrate.

According to other embodiments of the invention, a substrate comprises a metal surface having any of the compositions described above on at least a part of the metal surface. For example, in some embodiments, the substrate comprises an aluminum or aluminum alloy surface having the composition on at least a part of the surface. The substrate may then be coated with a primer and/or a topcoat, i.e., the composition according to embodiments of the invention may be applied to the metal substrate, optionally followed by coating with a primer coat, and/or a topcoat.

The compositions according to embodiments of the invention comprising a metal complexing agent and a corrosion inhibitor comprising a metal ion are compatible with conventional chromate based primer coats, such as the primer coat sold under Product Code Deft 44GN072, available from PRC-DeSoto International, Inc., Sylmar, CA. Alternately, the primer coat can be a chromate-free primer coat, which chromate-free primer coats are known in the art. Other suitable chrome-free primers include those that can pass the military requirement of MIL-PRF-85582 Class N or MIL-PRF-23377 Class N. Other nonlimiting examples of suitable primer coats include those available from PRC-DeSoto International, Inc., Sylmar, CA, Product Code numbers Deft 02GN083 and Deft 02GN084.

According to still other embodiments, the metal substrate may be pre-treated prior to contacting the metal substrate with the compositions described above. As used herein, the term "pre-treating" refers to the surface modification of the substrate prior to subsequent processing. Such surface modification can include various operations, including, but not limited to cleaning (to remove impurities and/or dirt from the surface), deoxidizing, and/or application of a solution or coating, as is known in the art. Pretreatment may have one or more benefits, such as the generation of a more uniform starting metal surface, improved adhesion to a subsequent coating on the pre-treated substrate, and/or modification of the starting surface in such a way as to facilitate the deposition of a subsequent conversion coating.

According to some embodiments, the metal substrate may be prepared by first solvent treating the metal substrate prior to contacting the metal substrate with the composition. As used herein, the term "solvent treating" refers to rinsing, wiping, spraying, or immersing the substrate in a solvent that assists in the removal of inks, oils, etc. that may be on the metal surface. Alternately, the metal substrate may be prepared by degreasing the metal substrate using conventional degreasing methods prior to contacting the metal substrate with composition.

The metal substrate may be pre-treated by solvent treating the metal substrate. Then, the metal substrate may be pre-treated by cleaning the metal substrate with an alkaline cleaner prior to application of the conversion coating composition. One example of a suitable pre-cleaner is a basic (alkaline) pretreatment cleaner. However, in some embodiments of the present invention (e.g., when a lithium based composition is first coated on the substrate followed by coating with an azole based composition), such a prior cleaning procedure may not be necessary (for example, because the lithium based composition is alkaline). The pre-cleaner may also include a corrosion inhibitor, some of which may "seed" the surface of the metal substrate during the cleaning process with the corrosion inhibitor to minimize metal surface attack, and/or facilitate the subsequent conversion coating. Other suitable, but nonlimiting, pre cleaners include degreasers and deoxidizers, such as Turco 4215-NCLT, available from Telford Industries, Kewdale, Western Australia, Arnchern 7/17 deoxidizers, available from Henkel Technologies, Madison Heights, MI, and phosphoric acid-based deoxidizers, available from PRC-DeSoto International, Inc., Sylmar, CA.

In some embodiments, the metal substrate may be pre-treated by mechanically deoxidizing the metal prior to applying the composition on the metal substrate. A nonlimiting example of a typical mechanical deoxidizer is uniform roughening of the surface using a Scotch-Brite pad, or similar device.

According to some embodiments, the metal substrate may be pretreated by solvent wiping the metal prior to applying the composition to the metal substrate. Nonlimiting examples of suitable solvents include methyl ethyl ketone (MEK), methyl propyl ketone (MPK), acetone, and the like.

Additional optional procedures for preparing the metal substrate include the use of a surface brightener, such as an acid pickle or light acid etch, a smut remover, as well as immersion in an alkaline solution.

The metal substrate may be rinsed with either tap water, or distilled/de-ionized water between each of the pretreatment steps, and may be rinsed well with distilled/de-ionized water and/or alcohol after contact with the conversion coating composition. However, as noted above, according to some embodiments of the present invention, some of the above described pre-treatment procedures and rinses may not be necessary prior to application of the composition.

Once the metal substrate has been appropriately pretreated, if desired, the composition may then be allowed to come in contact with at least a portion of the surface of the metal substrate. The metal substrate may be contacted with the composition using any conventional technique, such as dip immersion, spraying, or spreading using a brush, roller, or the like. With regard to application via spraying, conventional (automatic or manual) spray techniques and equipment used for air spraying may be used. In other embodiments, the composition may be applied using an electrolytic-coating system.

After contacting the metal substrate with the composition, the metal substrate may optionally be air dried. However, the substrate need not be allowed to dry, and in some embodiments, drying is omitted. A rinse is not required, but may be performed if desired.

According to some embodiments, the metal substrate may be first prepared by mechanical abrasion and then wet-wiped to remove smut. The substrate may then be air-dried prior to application. Next, the composition may be applied to the metal substrate and optionally allowed to dry, for example in the absence of heat greater than room temperature. However, the substrate need not be allowed to dry, and in some embodiments, drying is omitted. The substrate need not be rinsed, and the metal substrate may then be further coated with primers and/or top coats to achieve a substrate with a finished coating.

In some embodiments, a metal substrate comprises a composition according to an embodiment of the invention on at least a portion of the substrate, and a primer and/or topcoat on at least a portion of the composition. The azole compositions according to embodiments of the present invention are compatible with conventional chromate based primer coatings. Alternately, the primer coating can be a chromate-free primer coating, which chromate-free primer coatings are known in the art. Primer coatings capable of passing the military requirement of MIL-PRF-85582 Class N or MIL-PRF-23377 Class N may also be used with the conversion coatings according to embodiments of the present invention. The compositions according to embodiments of the invention comprising an azole compound and a corrosion inhibitor comprising a metal ion are compatible with conventional chromate based primer coats, such as the primer coat sold under Product Code Deft 44GN072, available from PRC-DeSoto International, Inc., Sylmar, CA. Alternately, the primer coat can be a chromate-free primer coat, which chromate-free primer coats are known in the art. Other suitable chrome-free primers include those that can pass the military requirement of MIL-PRF-85582 Class N or MIL-PRF-23377 Class N. Other nonlimiting examples of suitable primer coats include those available from PRC-DeSoto International, Inc., Sylmar, CA, Product Code numbers Deft 02GN083 and Deft 02GN084. The topcoat may be any suitable topcoat, for example, polyurethane or fluorinated polyurethane topcoats, which are known in the art.

In another embodiment, the azole compounds described herein may be incorporated into an epoxy or urethane or fluorinated urethane based primer and/or topcoat formulation or composition. In particularly suitable embodiments, the azole may comprise a benzotriazole, which may be added to the formulation in an amount of 1 g benzotriazole to 300 g of an epoxy base. To prepare the azole containing primer and/or topcoat formulation, the azole compound may be first dissolved in a solvent, such as an alcohol (e.g., isopropyl alcohol, or a secondary butyl alcohol), for example, which may facilitate addition to the primer and/or topcoat formulation.

When used in a primer and/or topcoat formulation or composition, the azole compound may be present in the primer and/or topcoat formulation or composition in an amount of 0.05 g/1000 L of composition to 70g/1000 L of composition. The primer and/or topcoat composition may have one or more corrosion co-inhibitors, such as rare earth oxides, and/or sulfate extenders.

The term "topcoat" refers to a mixture of binder(s), which can include an organic or inorganic based polymer or a blend of polymers, optionally a pigment, optionally a solvent or mixture of solvents, and optionally a curing agent. A topcoat is typically the coating layer in a single or multi-layer coating system whose outer surface is exposed to the atmosphere or environment, and its inner surface is in contact with another coating layer or polymeric substrate. Topcoats useful with embodiments of the present invention include polyurethane based topcoats. However, other topcoats and advanced performance topcoats can be used in the coating system according to embodiments of the present invention as will be understood by those of ordinary skill in the art with reference to this disclosure. Some nonlimiting examples of suitable topcoats include those conforming to MIL-PRF-85285D, such as Product Code numbers Deft 03W127A and Deft 03GY292, available from PRC-DeSoto International, Inc., Sylmar, CA. Some nonlimiting examples of suitable advanced performance topcoats include Product Code numbers Defthane^{®} ELT^{™} 99GY001 and 99W009, available from PRC-DeSoto International, Inc., Sylmar, CA.

In an alternate embodiment, a substrate comprises a composition according to an embodiment of the present invention on the substrate, and an azole containing self-priming topcoat, or an enhanced self-priming topcoat on the composition. The term "self-priming topcoat," also referred to as a "direct to substrate" or "direct to metal" coating, refers to a mixture comprising a binder(s), which can be an organic or inorganic based polymer or blend of polymers, optionally a pigment, optionally a solvent or mixture of solvents, and optionally a curing agent. The term "enhanced self-priming topcoat", also referred to as an "enhanced direct to substrate coating" refers to a mixture comprising functionalized fluorinated binders, such as a fluoroethylene-alkyl vinyl ether in whole or in part with other binder(s), which can include an organic or inorganic based polymer or blend of polymers, optionally a pigment, optionally a solvent or mixture of solvents, and optionally a curing agent. Nonlimiting examples of self-priming topcoats include those that conform to TT-P-2756A, Product Code numbers Deft 03WI69 and 03GY369, available from PRC-DeSoto International, Inc., Sylmar, CA. Nonlimiting examples of enhanced self-priming topcoats include Defthane^{®} ELT^{™} /ESPT, available from PRC-DeSoto International, Inc., Sylmar, CA. Another nonlimiting example of a self-priming topcoat is Product Code number Deft 97GY121, available from PRC-DeSoto International, Inc., Sylmar, CA.

The azole containing self-priming topcoat and enhanced self-priming topcoat may be applied directly to the substrate. The azole containing self-priming topcoat and enhanced self-priming topcoat can optionally be applied to an organic or inorganic polymeric coating, such as a primer and/or topcoat. The self-priming topcoat and enhanced self-priming topcoat may be the coating layer in a single or multi-layer coating system where the outer surface of the coating is exposed to the atmosphere or environment, and the inner surface of the coating may be in contact with the conversion coated substrate or optional polymer coating or primer.

The azole containing primers, topcoats, self-priming topcoats, and enhanced self-priming topcoats can be applied to the substrate, in either a wet or "not fully cured" condition that dries or cures over time, that is, solvent evaporates and/or there is a chemical reaction. The coatings can dry or cure either naturally or by accelerated means for example, an ultraviolet light cured system to form a film or "cured" coating. The coatings can also be applied in a semi or fully cured state, such as an adhesive.

Whereas particular embodiments of the present disclosure have been described above for purposes of illustration, it will be understood by those of ordinary skill in the art that numerous variations of the details of the present disclosure may be made without departing from the invention as defined in the appended claims, and equivalents thereof. For example, although embodiments herein have been described in connection with "an" azole compound, and the like, one or more of these components or any of the other components recited can be used according to the present disclosure.

Although various embodiments of the present disclosure have been described in terms of "comprising" or "including," embodiments "consisting essentially of" or "consisting of" are also within the scope of the present disclosure. For example, while the present disclosure describes a composition including a metal ion and an azole compound, a composition and/or a solution consisting essentially of or consisting of the metal ion and the azole compound is also within the scope of the present disclosure. Similarly, although a corrosion inhibitor comprising or including a metal ion and an azole compound is described, corrosion inhibitors consisting essentially of or consisting of a metal ion and an azole compound are also within the scope of the disclosure. Thus, as described above, the composition may consist essentially of the metal ion and the azole compound. In this context, "consisting essentially of" means that any additional components in the composition will not materially affect the corrosion resistance of a metal substrate coated with the composition. For example, a composition consisting essentially of a rare earth ion and an azole compound is free from Group IA (or Group 1, i.e., the alkali metals) and Group IIA (or Group 2, i.e., the alkali earth metals) metal ions. Also, a composition consisting essentially of an alkali or alkali earth metal ion and an azole compound is free from rare earth element ions.

As used herein, unless otherwise expressly specified, all numbers such as those expressing values, ranges, amounts or percentages may be read as if prefaced by the word "about," even if the term does not expressly appear. Further, use of the word "about" reflects the penumbra of variation associated with measurement, significant figures, and interchangeability, all as understood by a person having ordinary skill in the art to which this disclosure pertains. Any numerical range recited herein is intended to include all sub-ranges subsumed therein. Plural encompasses singular and vice versa. For example, while the present disclosure describes "an" azole compound, a mixture of such azole compounds can be used. When ranges are given, any endpoints of those ranges and/or numbers within those ranges can be combined within the scope of the present disclosure. The terms "including" and like terms mean "including but not limited to." Similarly, as used herein, the terms "on," "applied on," and "formed on" mean on, applied on, or formed on, but not necessarily in contact with the surface. For example, a coating layer "formed on" a substrate does not preclude the presence of one or more other coating layers of the same or different composition located between the formed coating layer and the substrate.

Notwithstanding that the numerical ranges and parameters set forth herein may be approximations, numerical values set forth in the specific examples are reported as precisely as is practical. Any numerical value, however, inherently contains certain errors necessarily resulting from the standard variation found in their respective testing measurements. The word "comprising" and variations thereof as used in this description and in the claims do not limit the disclosure to exclude any variants or additions.

The present application also refers to the following aspects:
1. A composition for application to a metal substrate, the composition comprising:
   an azole compound;
   a metal cation; and
   an aqueous carrier.
2. The composition according to aspect 1, wherein the metal cation comprises a rare earth element cation, an alkali metal cation, and/or an alkali earth metal cation.
3. The composition according to aspect 1, wherein the composition further comprises an anion capable of forming a salt with the metal cation.
4. The composition according to aspect 3, wherein the anion comprises a carbonate ion, a silicate ion, a nitrate ion, a halide ion, a phosphate ion, a sulfate ion, and/or a hydroxide ion.
5. The composition according to aspect 1, wherein the metal cation comprises Ce, Y and/or Li.
6. The composition according to aspect 1, wherein the azole compound comprises a cyclic compound having 1 nitrogen atoms, a cyclic compound having 2 or more nitrogen atoms, a cyclic compound having 1 nitrogen atom and 1 oxygen atom, and/or a cyclic compound having 1 nitrogen atom and 1 sulfur atom.
7. The composition according to aspect 1, wherein the azole compound comprises a pyrrole, a pyrazole, an imidazole, a triazole, a tetrazole, a pentazole, an oxazole, an isoxazole, a thiazole and/or a isothiazole.
8. The composition according to aspect 1, wherein the azole compound comprises 2,5-dimercapto-1,3,4-thiadiazole, IH-benzotriazole, IH-1,2,3-triazole, 2-amino-5-mercapto-1,3,4-thiadiazole, and/or 2-amino-1,3,4-thiadiazole.
9. A composition for application to a substrate, the composition comprising:
   a binder comprising an epoxy, a urethane, and/or a fluorinated urethane; and
   an azole compound.
10. The composition according to aspect 9, wherein the azole compound comprises a cyclic compound having 1 nitrogen atoms, a cyclic compound having 2 or more nitrogen atoms, a cyclic compound having 1 nitrogen atom and 1 oxygen atom, and/or a cyclic compound having 1 nitrogen atom and 1 sulfur atom.
11. The composition according to aspect 9, wherein the azole compound comprises a pyrrole, a pyrazole, an imidazole, a triazole, a tetrazole, a pentazole, an oxazole, an isoxazole, a thiazole and/or a isothiazole.
12. The composition according to aspect 9, wherein the azole compound comprises 2,5-dimercapto-1,3,4-thiadiazole, IH-benzotriazole, IH-1,2,3-triazole, 2-amino-5-mercapto-1,3,4-thiadiazole, and/or 2-amino-1,3,4-thiadiazole.
13. An article, comprising:
   a substrate; and
   the composition of aspect 1 on at least a portion of the substrate.
14. The article of aspect 12, wherein the substrate comprises aluminum.
15. The article of aspect 12, further comprising a coating on the composition.
16. A method of manufacturing an article, the method comprising:
   applying the composition of aspect 1 to at least a portion of a substrate.
17. The method of aspect 16, further comprising pre-treating the substrate prior to application of the composition.
18. The method of aspect 16, further comprising applying a coating on at least a portion of the conversion coating.

## Claims

1. A composition comprising a binder comprising a urethane and/or a fluorinated urethane and an azole compound;
wherein the composition is a primer and/or a topcoat composition.

2. The composition of claim 1, wherein the azole compound comprises a cyclic compound having 1 nitrogen atoms, a cyclic compound having 2 or more nitrogen atoms, a cyclic compound having 1 nitrogen atom and 1 oxygen atom, and/or a cyclic compound having 1 nitrogen atom and 1 sulfur atom.

3. The composition of claim 1 or claim 2, wherein the azole compound comprises a pyrrole, a pyrazole, an imidazole, a triazole, a tetrazole, a pentazole, an oxazole, an isoxazole, a thiazole, and/or an isothiazole.

4. The composition of any of the preceding claims wherein the azole compound comprises 2,5-dimercapto-1,3,4-thiadiazole, 1H-benzotriazole, 1H-1,2,3-triazole, 2-amino-5-mercapto-1,3,4-thiadiazole, and/or 2-amino-1,3,4-thiadiazole.

5. An article comprising:
a metal substrate; and
a coating formed from the composition of any of the preceding claims on at least a portion of the substrate.

6. The article of claim 5, wherein the substrate comprises aluminum.

7. A method comprising applying the composition of any of claims 1 to 4 on at least a portion of the substrate.

8. The method of claim 7, further comprising applying a conversion composition to a metal substrate on at least a portion of the substrate.

9. The method of claim 7 or claim 8, wherein the composition is applied by dip immersion, spraying, spreading using a brush or a roller, or using an electrolytic coating system.
